(19) Europäisches Patentamt
European Patent Office
Office européen des brevets

(11) **EP 3 994 286 B1**

## (12) FASCICULE DE BREVET EUROPEEN

(45) Date de publication et mention
de la délivrance du brevet:
**18.09.2024  Bulletin 2024/38**

(21) Numéro de dépôt: **20735602.3**

(22) Date de dépôt: **03.07.2020**

(51) Classification Internationale des Brevets (IPC):
**C22C 16/00** *(2006.01)*     **G21C 3/07** *(2006.01)*
**G21C 21/00** *(2006.01)*     **C22C 1/04** *(2023.01)*

(52) Classification Coopérative des Brevets (CPC):
**C22C 16/00; G21C 3/07; G21C 21/00;** Y02E 30/30

(86) Numéro de dépôt international:
**PCT/EP2020/068839**

(87) Numéro de publication internationale:
**WO 2021/004943 (14.01.2021 Gazette 2021/02)**

(54) **COMPOSANT TUBULAIRE DE RÉACTEUR NUCLÉAIRE À EAU PRESSURISÉE ET PROCÉDÉ DE FABRICATION DE CE COMPOSANT**

ROHRFÖRMIGE KOMPONENTE EINES DRUCKWASSERKERNREAKTORS UND VERFAHREN ZUR HERSTELLUNG DIESER KOMPONENTE

TUBULAR COMPONENT OF PRESSURISED WATER NUCLEAR REACTOR AND METHOD FOR MANUFACTURING SAID COMPONENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **05.07.2019  FR 1907524**

(43) Date de publication de la demande:
**11.05.2022  Bulletin 2022/19**

(73) Titulaire: **Framatome**
**92400 Courbevoie (FR)**

(72) Inventeurs:
• **BARBERIS, Pierre**
**73400 UGINE (FR)**
• **LEGRAND, Philippe**
**44380 PORNICHET (FR)**

(74) Mandataire: **Lavoix**
**2, place d'Estienne d'Orves**
**75441 Paris Cedex 09 (FR)**

(56) Documents cités:
**WO-A1-01/24193     WO-A1-2006/027436**
**WO-A1-97/05628     JP-A- H10 260 280**
**US-B1- 6 261 516**

**Description**

L'invention concerne le domaine de la fabrication d'éléments en alliage de zirconium pour réacteurs nucléaires à eau pressurisée, et notamment les tubes de structure et les tubes de gainage pour crayons pour assemblages de combustible nucléaire.

Divers alliages de zirconium, ternaires ou quaternaires (c'est-à-dire comportant respectivement deux ou trois éléments d'alliage principaux en plus du Zr), dont la composition peut être couplée à un procédé de traitement thermomécanique et/ou de finition particulier permettant de conférer au produit qu'ils constituent des caractéristiques élevées de résistance à la corrosion, sont proposés aux utilisateurs pour réaliser des composants de réacteurs nucléaires à eau pressurisée. Ces alliages sont notamment utilisés pour les composants de structure (grilles, tubes-guides et éventuel tube d'instrumentation) et les tubes de gainage des pastilles de combustible, également appelés gaines, des assemblages de combustible nucléaire. Ces alliages doivent résister aux diverses formes de corrosion pouvant intervenir en fonctionnement normal du réacteur, mais également présenter une bonne résistance à la corrosion en conditions accidentelles, en particulier en cas de perte de fluide réfrigérant (« Accident par Perte de Réfrigérant Primaire », APRP, ou « Loss Of Coolant Accident », LOCA en anglais), c'est-à-dire à très haute température (plus de 900°C) et dans une atmosphère de vapeur d'eau.

Il est connu qu'une rugosité élevée de la surface d'un tube pour assemblage de combustible nucléaire dégrade la tenue à la corrosion en réacteur.

Le document WO-A-2006/027436, par exemple, a montré qu'un polissage mécanique final de la surface externe d'un tube de gainage lui imposant une rugosité Ra inférieure ou égale à 0,5 μm, couplé à une composition de l'alliage de zirconium contenant, en sus du zirconium et des impuretés résultant de l'élaboration , 0,8 à 2,8% de Nb, 0,015 à 0,40% de Fe, 600 à 2300 ppm d'O, 5 à 100 ppm de S et, éventuellement, un peu de Sn, Cr ou V, et à un procédé de préparation du tube définis, permettait d'améliorer la tenue à la corrosion à haute température du tube, en particulier aux températures que l'on peut rencontrer lors d'un APRP. La nécessité de limiter, autant que possible, les teneurs en Hf et F de cet alliage est aussi affirmée, et le polissage mécanique final permet d'éliminer les éventuelles traces de F en surface, qui résulteraient par exemple d'un décapage dans un bain fluoré, tout en obtenant la rugosité Ra désirée.

Le comportement d'un tube en alliage de zirconium lors d'un APRP est, par exemple, évalué à l'aide d'un test d'oxydation sous vapeur d'eau d'un échantillon dudit tube, à une température de 1000°C. Un tel essai est par exemple décrit dans l'article « AREVA NP M5® Cladding Benefits for Proposed U.S. NRC RIA and LOCA Requirements » présenté en septembre 2016 lors du « LWR Fuels with Enhanced Safety and Performance Meeting » (TopFuel 2016).

La cinétique de corrosion, mesurée par le gain de masse de l'échantillon résultant de l'oxydation, est initialement de type parabolique. Une dégradation de la cinétique (que les hommes du métier appellent couramment « breakaway ») se manifeste au bout d'une certaine durée d'essai par une accélération de la corrosion, et/ou par une importante absorption d'hydrogène, dite « hydruration » (typiquement une reprise d'hydrogène allant au-delà de 200 ppm).

L'hydruration d'un composant en alliage de zirconium dégrade ses propriétés mécaniques et microstructurales et peut conduire à sa déformation voire à sa rupture, partielle ou totale, par exemple par fissuration puis éclatement local dans le cas d'un tube de gainage de crayon de combustible nucléaire.

Les tubes conformes aux préconisations du document WO-A-2006/027436 présentent, dans l'absolu, une bonne résistance à la corrosion en conditions accidentelles, avec un breakaway intervenant au bout d'environ 5 000 s, contre 1800 s environ pour les alliages les plus habituels.

Cependant, obtenir de façon assurée un report encore plus important du moment d'apparition du breakaway serait un avantage fondamental pour la sûreté du réacteur nucléaire en cas d'accident.

Le but de l'invention est de proposer une méthode permettant d'obtenir de façon fiable des tubes pour assemblage de combustible nucléaire pour réacteur à eau pressurisée avec des propriétés de résistance à la corrosion et à l'hydruration encore améliorées par rapport à celles d'alliages connus actuellement, notamment de ceux de type M5, en particulier lors d'expositions à de très hautes températures en conditions accidentelles telles que celles d'un APRP.

A cet effet, l'invention a pour objet un composant tubulaire de réacteur nucléaire à eau pressurisée, dont la composition pondérale consiste en :

- 0,8% ≤ Nb ≤ 2,8% ;
- traces ≤ Sn ≤ 0,65% ;
- 0,015% ≤ Fe ≤ 0,40% ; de préférence 0,020 % ≤ Fe ≤ 0,35 % ;
- traces ≤ C ≤100 ppm ;
- 600 ppm ≤ O ≤ 2300 ppm ; de préférence 900 ppm ≤ O ≤ 1800 ppm ;
- 5 ppm ≤ S ≤ 100 ppm ; de préférence 8 ppm ≤ S ≤ 35 ppm
- traces ≤ Cr + V + Mo + Cu ≤ 0,35% ;
- traces ≤ Hf ≤ 100 ppm ;
- F ≤ 1 ppm ;

le reste étant du zirconium et des impuretés résultant de l'élaboration, et dont la surface externe a une rugosité Ra inférieure ou égale à 0,5 μm, obtenue à la suite d'un polissage mécanique final, caractérisé en ce que sa surface externe a une rugosité Rsk ≤ 1 en valeur absolue, et une rugosité Rku ≤ 10.

La surface externe du composant peut avoir une rugosité Ra inférieure ou égale à 0,3 μm, obtenue à la suite dudit polissage mécanique final.

La surface externe du composant peut avoir une rugosité Rsk ≤ 0,75 en valeur absolue, et une rugosité Rku ≤ 9.

L'invention a également pour objet un procédé de fabrication d'un tube de gainage de combustible pour réacteur nucléaire, caractérisé en ce que :

- on prépare un lingot d'un alliage de zirconium de composition pondérale :

  * 0,8% ≤ Nb ≤ 2,8% ;
  * traces ≤ Sn ≤ 0,65% ;
  * 0,015% ≤ Fe ≤ 0,40% ; de préférence 0,020 % ≤ Fe ≤ 0,35 % ;
  * traces ≤ C ≤ 100 ppm ;
  * 600 ppm ≤ O ≤ 2300 ppm ; de préférence 900 ppm ≤ O ≤ 1800 ppm ;
  * 5 ppm ≤ S ≤ 100 ppm ; de préférence 8 ppm ≤ S ≤ 35 ppm ;
  * traces ≤ Cr + V + Mo + Cu ≤ 0,35% ;
  * traces ≤ Hf ≤ 100 ppm ;
  * F ≤ 1 ppm ;

  le reste étant du zirconium et des impuretés résultant de l'élaboration ;
  - on exécute sur le lingot un forgeage, suivi optionnellement d'une trempe, puis un filage et des traitements thermomécaniques comportant des laminages à froid séparés par des recuits intermédiaires, tous les recuits intermédiaires étant effectués à une température inférieure à la température de transus α → α + β de l'alliage, se terminant par un recuit de détente, de semi-recristallisation ou de recristallisation, et aboutissant à l'obtention d'un tube ;
  - optionnellement, on procède à un décapage chimique et/ou à un polissage électrolytique et/ou à un polissage mécanique initial de la surface externe dudit tube ;
  - et on exécute un polissage mécanique final de ladite surface externe pour lui conférer une rugosité Ra inférieure ou égale à 0,5 μm, une rugosité Rsk ≤ 1 en valeur absolue, et une rugosité Rku ≤ 10.

Les recuits intermédiaires peuvent être effectués à des températures inférieures ou égales à 600°C.

Ledit polissage mécanique final peut être réalisé avec une roue de finition.

Ledit polissage mécanique final peut être réalisé par abrasion avec une pâte abrasive.

Ledit polissage mécanique final peut être réalisé par un procédé choisi parmi le rodage, l'extrusion de pâte abrasive et l'abrasion à l'aide d'un feutre ou d'un drap de polissage imprégné de pâte abrasive.

Ledit polissage mécanique final peut être réalisé par galetage.

Comme on l'aura compris, l'invention consiste à fabriquer un composant tubulaire de réacteur nucléaire à eau pressurisée, notamment un tube de structure, à savoir un tube-guide ou un tube d'instrumentation, ou une gaine d'un assemblage de combustible nucléaire, à partir d'un tube réalisé en un alliage Zr-Nb à 0,8-2,8% de Nb, contenant aussi un peu de Fe et de S, voire aussi du Sn, du Cr, du V, du Mo et/ou du Cu, et ayant une teneur en O pouvant être relativement élevée, et préparé selon le procédé décrit dans WO-A-2006/027436, à la possible exception de la trempe après forgeage qui n'est pas strictement nécessaire pour les alliages Zr-Nb. Après lui avoir fait subir les traitements thermiques adéquats pour lui conférer les propriétés mécaniques désirées, et, de préférence, un décapage chimique (qui est généralement effectué avant le dernier traitement thermique), on réalise un polissage de la surface externe du tube selon un procédé permettant d'obtenir, à l'issue d'une opération de polissage mécanique dite « polissage mécanique final », une finition de surface particulière, qui est définie non seulement par sa grandeur Ra, mais aussi par ses grandeurs Rsk et Rku. Ces impératifs ont pour but d'assurer que la surface externe du tube présentera une morphologie qui la rendra aussi peu sensible que possible à la corrosion et/ou à l'hydruration en situations accidentelles et notamment en cas d'APRP.

D'autres opérations de polissage, non forcément toutes mécaniques, peuvent précéder le polissage mécanique final qui conduit au type de rugosité selon l'invention et constitue donc l'étape principale du procédé selon l'invention. Dans la suite du texte on parlera de « polissage initial » pour désigner un polissage qui ne serait qu'une étape intermédiaire de l'obtention de la rugosité, et de « polissage final » pour désigner le dernier polissage, qui conduit à l'obtention de la rugosité visée.

Il va de soi que si une seule opération de polissage mécanique est effectuée lors du traitement selon l'invention de la surface du produit cette opération constitue le polissage mécanique final dont on a parlé. Cette étape de polissage mécanique final peut être suivie d'autres étapes de fabrication, notamment un contrôle, un dégraissage, etc. mais aucune des étapes ultérieures ne doit conduire à une contamination de la surface, notamment avec des halogènes, ou à une dégradation de sa rugosité.

Par sa composition, l'alliage de la société Framatome, connu sous le nom de marque « M5 » ou « M5$_{Framatome}$ », entre notamment dans le champ d'application de l'invention.

L'invention sera mieux comprise à la lecture de la description qui suit, donnée en référence aux figures annexées suivantes :

La figure 1 qui montre le gain de masse d'échantillons de référence d'un alliage Zr-Nb (de type M5$_{Framatome}$) conforme aux exigences de composition et de Ra de WO-A-2006/027436 en fonction de la racine carrée du temps de séjour à une température de 1000°C en milieu vapeur d'eau ;

La figure 2 qui montre l'évolution de la teneur en hydrogène de ces mêmes échantillons de référence en fonction de la racine carrée du temps de séjour à une température de 1000°C en milieu vapeur d'eau ;

La figure 3 qui montre les gains de masse et la teneur en hydrogène des mêmes échantillons de référence et d'échantillons selon l'invention en fonction de la racine carrée du temps de séjour à une température de 1000°C en milieu vapeur d'eau.

Le comportement d'un tube lors d'un test APRP tel que décrit précédemment dépend de la rugosité de surface externe qui est, le plus habituellement, décrite uniquement par le paramètre Ra tel qu'il est défini dans la norme NF EN ISO 4287. Celui-ci correspond, sur une longueur d'évaluation donnée, appelée longueur de base, à l'écart moyen arithmétique du profil de rugosité de la surface, celle-ci comportant des saillies et des creux de différentes hauteurs par rapport à la ligne moyenne du profil de rugosité. Ra constitue une évaluation de la moyenne des valeurs absolues des hauteurs. Ra est calculé par la formule :

$$Ra = \frac{1}{lr} \int_0^{lr} |Z(x)| dx$$

où lr est la longueur de base du profil de rugosité et $Z(x)$ est l'ordonnée (ou hauteur) du profil de rugosité pour une abscisse x sur la ligne moyenne du profil de rugosité. A noter que l'origine de la hauteur est la valeur moyenne du profil de rugosité et qu'en conséquence l'intégrale de $Z(x)$ prise de 0 à lr est nulle.

Mais, de fait, l'expérience des inventeurs a montré que le paramètre Ra ne suffit pas à rendre compte d'une manière fine du comportement de l'alliage dans des conditions susceptibles d'entraîner une oxydation et/ou une hydruration importante du tube, et, en particulier, à expliquer le très bon comportement observé lorsque la surface externe de celle-ci a été traitée selon l'invention.

Les inventeurs ont constaté que deux paramètres, définis dans la norme NF EN ISO 4287, présentaient aussi une importance particulière pour la résolution du problème posé. Il s'agit des paramètres Rsk, dit « facteur d'asymétrie » ou « skewness » en anglais, et Rku, dit « facteur d'aplatissement » ou « kurtosis ».

Le paramètre Rsk définit l'asymétrie du profil de rugosité évalué. Il traduit l'asymétrie de la distribution des hauteurs par rapport à la ligne moyenne du profil de rugosité, définie sur la longueur de base lr. Il donne une information sur la morphologie de l'état de surface. Une valeur de Rsk nulle correspond à une distribution normale (gaussienne) des hauteurs autour de la ligne moyenne. Une valeur positive de Rsk correspond à un profil « creux » présentant une distribution des hauteurs décalée vers les valeurs les plus hautes ; c'est le cas par exemple d'une surface en plateau avec des saillies prépondérantes. Une valeur négative de Rsk correspond à un profil « plein » présentant une distribution des hauteurs décalée vers les valeurs les plus basses, c'est le cas par exemple d'une surface en plateau avec des creux prépondérants. Rsk est calculé par la formule :

$$Rsk = \frac{1}{Rq^3} \left[ \frac{1}{lr} \int_0^{lr} Z^3(x) dx \right]$$

où Rq est l'écart moyen quadratique du profil évalué sur la longueur de base lr selon :

$$Rq = \sqrt{\frac{1}{lr} \int_0^{lr} Z^2(x) dx}$$

Rq correspond à la moyenne quadratique des hauteurs sur la longueur de base lr.

Le paramètre Rku définit l'aplatissement du profil de rugosité évalué, c'est-à-dire la largeur de la distribution des hauteurs par rapport à la ligne moyenne du profil de rugosité, définie sur la longueur de base lr. Il donne une information sur la morphologie de l'état de surface. Une valeur de Rsk égale à 3 correspond à une distribution normale (gaussienne) des hauteurs. Une valeur de Rku supérieure à 3 correspond à un profil « serré » par rapport à la distribution normale, c'est-à-dire présentant de façon prépondérante des hauteurs faibles en valeur absolue par rapport à la ligne moyenne du profil de rugosité. Une valeur de Rku inférieure à 3 correspond à un profil « étalé » par rapport à la distribution normale, c'est-à-dire avec une plus forte proportion de hauteurs éloignées de la ligne moyenne, par exemple avec des hauteurs distribuées de façon égale sur l'ensemble de la plage. Rku est calculé par la formule :

$$Rku = \frac{1}{Rq^4}\left[\frac{1}{lr}\int_0^{lr} Z^4(x)dx\right]$$

Rsk et Rku, sont notamment utilisés en tribologie pour évaluer les caractéristiques de contact et de résistance à l'usure et l'aptitude à la lubrification de la surface mesurée mais ne sont pas utilisés pour rendre compte de la résistance à la corrosion d'une surface.

Les inventeurs ont constaté que, toutes choses égales par ailleurs, si les paramètres Rsk (facteur d'asymétrie) et Rku (facteur d'aplatissement) de la surface externe du tube respectent certains critères, la cinétique d'oxydation en conditions accidentelles, notamment en cas d'APRP, reste parabolique sur la durée du test. Dans le cas contraire il y a une accélération de l'oxydation au cours du test.

Les contraintes macroscopiques de surface qui sont induites par l'oxydation ne permettent pas, à elles seules, d'expliquer la différence de comportement observée sur les échantillons de tubes avec un breakaway tardif, voire sans breakaway, sur la durée du test. L'hypothèse avancée par les inventeurs pour expliquer cette différence de comportement est que les contraintes pourraient également jouer localement sur l'oxydation, au niveau des aspérités de la surface. Une surface avec de nombreuses saillies prononcées pourrait présenter un risque augmenté de fissuration de l'oxyde perpendiculaire à l'interface oxyde-métal, et une oxydation localement accélérée au niveau des saillies.

La surface visée est une surface polie (Ra $\leq$ 0,5 $\mu$m, de préférence $\leq$ 0,3 $\mu$m) présentant une distribution de rugosité sensiblement symétrique, c'est-à-dire un facteur d'asymétrie Rsk proche de zéro en valeur absolue : |Rsk| $\leq$ 1 et de préférence |Rsk| $\leq$ 0,75, et des saillies et creux pas trop prononcés, ce qui se traduit par un facteur d'aplatissement Rku inférieur ou égal à 10, de préférence inférieur ou égal à 9.

L'amélioration de comportement observée peut être obtenue de façon reproductible en réalisant une finition de surface mécanique soignée, permettant d'obtenir la rugosité souhaitée pour la surface extérieure du tube.

Les moyens d'obtenir cette finition étant variés, on ne peut les décrire ici de façon exhaustive.

Un mode d'obtention possible pour cette finition consiste à polir successivement le tube avec des roues en carbure de silicium SiC de grains croissants (par exemple jusqu'au grain 240 mesh ou plus selon la norme ISO 8486-2), ces opérations constituant un polissage mécanique initial, et de terminer par un polissage final avec une roue de finition telle qu'une meule de finition enroulée, une brosse radiale, un disque à lamelles... de grain très fin, par exemple une roue de finition de la marque Scotch Brite™. Ce mode de finition permet d'obtenir des tubes présentant a minima un breakaway tardif, c'est-à-dire survenant au-delà de 10 000 secondes, pour un alliage dont la composition et le mode de préparation avant le polissage final sont sensiblement conformes à ceux exposés dans WO-A-2006/027436.

Le polissage initial peut aussi comprendre un polissage non mécanique (par exemple polissage chimique ou électrolytique) utilisé seul ou en combinaison avec un polissage mécanique. Ce polissage initial est alors suivi par une opération de polissage mécanique final.

On peut aussi, si l'expérience montre qu'un seul polissage mécanique peut permettre, sur le produit traité, d'obtenir la rugosité visée, n'exécuter qu'un seul polissage mécanique que l'on qualifiera de « polissage mécanique final » puisqu'il constitue la dernière opération de polissage de la surface du produit.

Les étapes de polissage mécanique et les moyens employés pour ces étapes, notamment pour le polissage mécanique final, pourront être définis avec les fournisseurs de ce type de moyens sur la base d'une spécification incluant, classiquement, la rugosité finale souhaitée et son mode de contrôle. On précisera aussi les matériaux de polissage devant être évités, car pouvant se révéler préjudiciables ou difficiles à enlever, notamment ceux définis dans les documents applicables tels que le RCC-C (Règles de Conception et de Construction applicables aux assemblages de combustible des centrales nucléaires REP - Design and Construction Rules for Fuel Assemblies of PWR Nuclear Power Plants) édité par l'AFCEN (Association Française pour les Règles de Conception, de Construction et de Surveillance en Exploitation des Matériels des Chaudières Electro-Nucléaires).

Les paramètres exacts des processus de polissage mécanique, initial éventuel et final, permettant de parvenir au type de rugosité souhaité pourront être déterminés expérimentalement par l'homme du métier, au moyen d'une série d'essais habituels. Il faudra, pour cela, corréler les moyens de polissage à employer, ainsi que leurs paramètres d'utilisation, à la composition du tube et aux traitements thermomécaniques qu'il a subis, et éventuellement au décapage chimique et/ou au polissage électrolytique qui a ou ont pu précéder la ou les étapes de polissage mécanique. Ces caractéristiques conditionnent notamment la dureté et l'état de surface externe du tube avant la ou les étapes de polissage mécanique, et peuvent jouer sur le résultat du polissage mécanique final, toutes choses étant égales par ailleurs.

Ce procédé de finition de la surface du tube pour obtenir la gaine de combustible selon l'invention est donc appliqué à un tube en alliage de zirconium, contenant d'éventuelles impuretés résultant de son élaboration, dont la composition pondérale et le mode de préparation sont les suivants, pour les raisons citées dans le document WO-A-2006/027436.

Sa teneur en Nb est de 0,8 à 2,8%.

Sa teneur en Sn est comprise entre des traces (autrement dit, une teneur égale à zéro ou à peine supérieure à zéro, ne résultant que de l'élaboration de l'alliage, sans ajout volontaire de l'élément considéré) et 0,65%. La limite habituelle de détection de cet élément est de l'ordre de 30 ppm, et il doit être entendu que la teneur en Sn peut descendre jusqu'à des valeurs correspondant à de simples traces telles que définies plus haut (et incluant donc une valeur qui serait strictement nulle).

Sa teneur en Fe est d'au moins 0,015%, de préférence au moins 0,02%, et d'au plus 0,40%, de préférence d'au plus 0,35%.

Du Cr, du V, du Cu ou du Mo peuvent optionnellement être présents, pour compléter ou se substituer à une partie du Fe, à condition que la somme de leurs teneurs ne dépasse pas 0,35%.

La teneur en C de l'alliage ne doit pas dépasser 100 ppm.

L'alliage contient entre 600 et 2300 ppm d'O, de préférence entre 900 et 1800 ppm.

La teneur en S doit être maintenue entre 5 et 100 ppm, de préférence entre 8 et 35 ppm.

La présence de Hf au sein de l'alliage est à éviter. Sa teneur doit être très basse, de sorte que dans l'alliage final, on ne retrouve pas plus de 100 ppm de Hf, de préférence pas plus de 75 ppm de Hf. Un soin particulier doit donc être apporté à la séparation du Hf lors de la préparation de l'éponge de Zr à partir de laquelle est fabriqué l'alliage.

Le F présent au sein de l'alliage doit être limité à 1 ppm au maximum.

Une exigence également très importante est l'absence de fluorures à la surface de l'alliage.

Comme indiqué dans WO-A-2006/027436, il est absolument indispensable, pour obtenir un tube de structure ou un tube de gainage à résistance à la corrosion et à l'hydruration améliorées lors d'un APRP, d'utiliser des préparations de surfaces qui aboutissent à une élimination radicale des fluorures. De ce point de vue, la réalisation d'un polissage mécanique postérieurement à un décapage chimique est le procédé le plus indiqué pour préparer la surface du tube avant son utilisation.

De plus, les exigences très précises sur les caractéristiques de rugosité de la surface externe du produit tubulaire final, qui ne se limitent pas à une valeur maximale de Ra, risquent de ne pas être accessibles aisément à l'aide d'un polissage chimique. Il faut donc réaliser au moins l'étape finale de la préparation de la surface du tube sous forme d'un polissage par des moyens mécaniques, par exemple par le procédé précédemment décrit et dont on détaillera des exemples plus loin.

La préparation des tubes à partir du lingot résultant de l'élaboration de l'alliage s'effectue selon un procédé comportant un forgeage, suivi optionnellement d'une trempe, un filage et des laminages à froid séparés par des recuits intermédiaires, tous les recuits étant effectués à une température inférieure à la température de transus $\alpha \rightarrow \alpha + \beta$ de l'alliage, donc généralement à moins de 600°C. Ces traitements thermiques à relativement basse température permettent d'obtenir une bonne tenue à la corrosion dans des conditions normales de service, et incluent un recuit final de détente, de semi-recristallisation ou de recristallisation, selon la microstructure qui est souhaitée pour le produit final. Celle-ci peut être différente pour les diverses catégories et les différents usages des tubes concernés par l'invention. Par exemple, une recristallisation est conseillée quand on veut obtenir une bonne tenue au fluage pour le tube.

De manière générale, dans la pratique industrielle, on peut conseiller de procéder à 3, 4 ou 5 passes de laminage à froid, séparées par des recuits intermédiaires effectués chacun à une température située entre 500 et 580°C, par exemple entre 1 h à 500°C et 12 h, voire 24 h, à 580°C.

Une autre condition nécessaire à la résolution du problème posé est l'imposition à la surface externe du tube d'une très faible rugosité Ra, inférieure ou égale à 0,5 $\mu$m, de préférence inférieure à 0,3 $\mu$m.

L'obtention d'une rugosité Ra aussi basse était déjà conseillée dans WO-A-2006/027436. Mais selon la présente invention, deux autres conditions sont nécessaires pour encore mieux optimiser le comportement en APRP de l'alliage concerné :

- Un Rsk inférieur ou égal à 1 en valeur absolue (donc compris entre -1 et +1) ; de préférence inférieur ou égal à 0,75 en valeur absolue (donc compris entre - 0,75 et +0,75) ;
- Et un Rku inférieur ou égal à 10, de préférence inférieur à 9.

L'invention vise à obtenir une prolongation sensible de la période pendant laquelle on n'observe pas de breakaway, pour des tubes d'alliages Zr-Nb incluant l'alliage M5$_{Framatome}$.

A cet effet, des échantillons de tubes de gainage (9,5 mm de diamètre et 0,57 mm d'épaisseur) ont été testés, pour différentes compositions et configurations de rugosités de leur surface externe, obtenues au moyen, notamment, de polissages finaux de divers types qui seront décrits plus loin en détail.

Le Zr utilisé pour la réalisation des tubes a été obtenu par des procédés classiques, sous forme d'éponge ou de cristaux électrolytiques pauvres en Hf (moins de 100 ppm dans l'alliage). Après une fusion suffisante pour permettre l'élimination du fluor résiduel éventuel (F < 1 ppm sur tube fini), un procédé classique de transformation du lingot pour l'obtention de tubes de gainage, de tubes-guides ou de tubes d'instrumentation pour réacteur nucléaire à eau pressurisée a été utilisé : forgeage, trempe éventuelle, filage, laminage à pas de pèlerin en 3 à 5 passes avec des recuits intermédiaires à température inférieure à la température de transus $\alpha \rightarrow \alpha + \beta$. A l'exception de la trempe qui n'a pas systématiquement été réalisée, ce procédé est identique à celui décrit dans WO-A-2006/027436, notamment pour ce qui concerne les éventuels décapage et polissage internes.

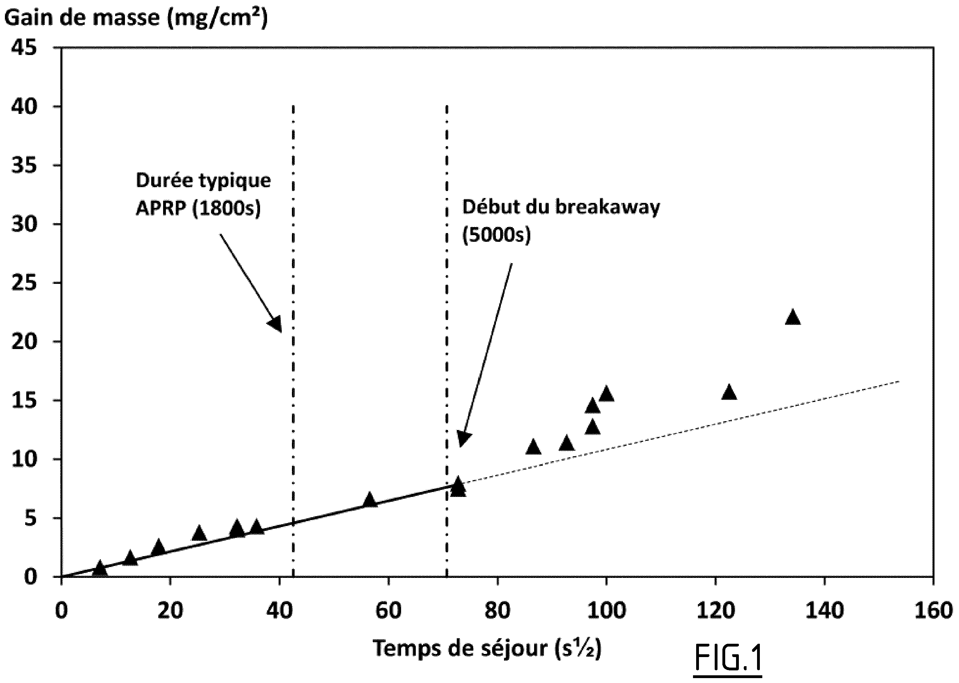

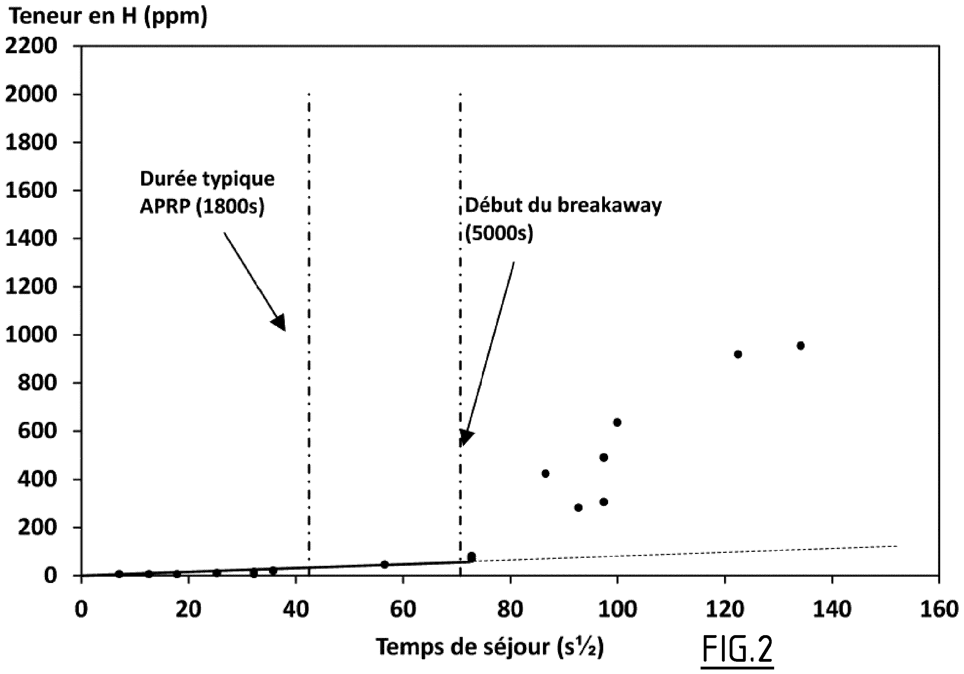

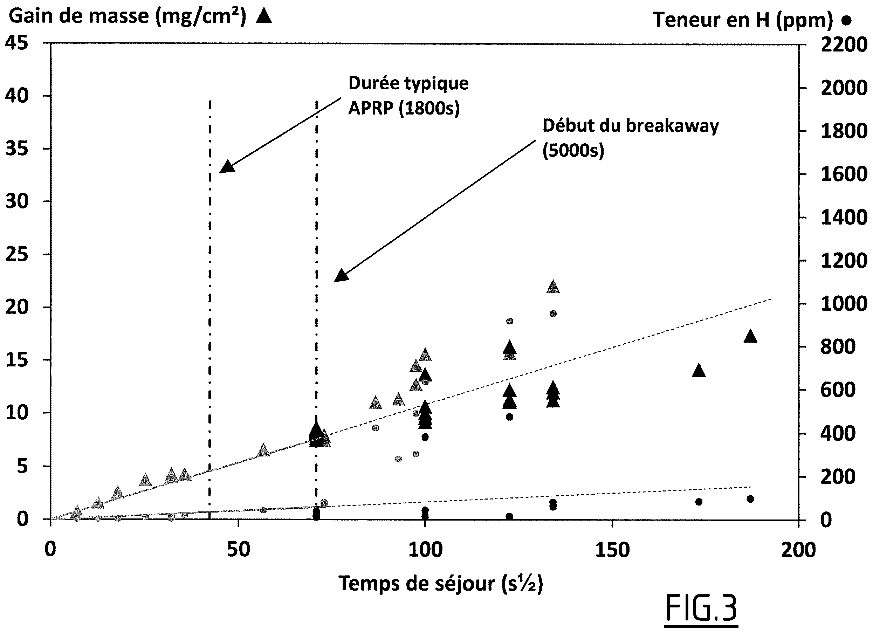

Le tableau 1 montre les compositions de huit premiers de ces tubes en alliage M5$_{Framatome}$, les variantes de fabrication utilisées ainsi que leurs gains de masse et leurs teneurs en hydrogène en liaison avec les figures 1 et 2 et/ou la figure 3. Tous les tubes sont à l'état recristallisé et ont été décapés avant le dernier traitement thermique.

Sur les figures 1 et 2, est représenté le comportement dans un milieu de vapeur d'eau à 1000°C (test d'oxydation tel que décrit dans l'article TopFuel 2016 cité ci-avant) d'échantillons de référence de tubes en alliage M5$_{Framatome}$ conforme aux exigences de composition de WO-A-2006/027436 : Zr ; 1,02% de Nb ; entre 200 et 1000 ppm de Fe ; entre 1000 et 1500 ppm d'O ; entre 5 et 35 ppm de S et moins de 1 ppm de F, et de rugosité Ra inférieure à 0,5 mais non conformes à l'invention pour ce qui concerne la rugosité Rsk avec des valeurs pour certains d'entre eux dans les plages [-1,65 ;-1] ou [+1 ; +1,48] et/ou la rugosité Rku avec des valeurs pour certains d'entre eux dans la plage [10 ; 15,55].

La figure 1 montre les gains de masse (dus à l'oxydation) en fonction de la racine carrée du temps de séjour dans le milieu concerné, et la figure 2 montre l'évolution de la teneur en hydrogène en fonction de la racine carrée du temps de séjour dans le milieu concerné (NB : du fait que l'on prend en compte, pour l'axe des abscisses, la racine carrée du temps de séjour, les courbes sont notablement plus aplaties qu'elles ne le seraient si l'axe des abscisses représentait le temps de séjour).

Les échantillons de référence présentent, selon les critères habituels, une bonne résistance à la corrosion et à l'hydruration en conditions accidentelles, avec un breakaway intervenant au bout d'environ 5 000 s qui se traduit par une brusque accélération des phénomènes d'oxydation (figure 1) et d'hydruration (figure 2) comme illustré par la position des points expérimentaux qui sont systématiquement au-dessus des prolongations (en pointillés) des droites de régression représentatives des évolutions du gain de masse (figure 1) et de la teneur en H (figure 2) avant que le breakaway ne survienne. Typiquement, comme indiqué sur les figures 1 et 2, la durée pendant laquelle une gaine de combustible est soumise à un APRP est de 1800 s, mais la gaine doit pouvoir résister à des expositions plus longues.

Pour ne pas alourdir la description, seuls 4 échantillons de référence parmi ceux testés sont reportés dans le tableau 1 : les échantillons 1, 4, 5 et 7.

Pour tous les échantillons du tableau 1, les compositions nominales sont indiquées pour ce qui concernent les principaux éléments d'alliages. Ils contiennent tous 1,0% de Nb et une teneur en Fe située entre 0,02 et 0,07%. Tous les tubes testés comprenaient moins de 100 ppm de C et de Hf et moins de 1 ppm de fluor. Les éléments qui ne sont pas mentionnés sont présents au plus à l'état de traces.

Les tubes des échantillons 1 à 8 ont tous subi 4 passes de laminage avec des recuits intermédiaires pendant 2h à 580°C.

Le tableau 1 fournit aussi les résultats de mesures de rugosité Ra, Rku et Rsk effectuées à l'aide d'un rugosimètre Mitutoyo SV2000 sur ces tubes de gainage. Ces rugosités ont été obtenues avec des moyens de finition variés. Les mesures ont été réalisées conformément à la norme applicable. Par exemple, pour des stries de polissage tangentielles par rapport au tube de gainage, les mesures ont été réalisées sur des génératrices du tube, sur une longueur de 4 mm avec un cut-off de 0,8 mm. Trois mesures ont été faites sur chacun des tubes, la moyenne et l'écart-type de ces mesures sont rapportés dans le tableau 1.

[Table 1]

Tableau 1 : Composition, variante de fabrication, gain de masse, teneur en hydrogène et rugosité des tubes 1 à 8

| Tube | 1 | 2 | 3 | 4 | 5 | 6 | 7 | 8 |
|---|---|---|---|---|---|---|---|---|
| Composition | Zr 1,0Nb 0,02Fe | Zr 1,0Nb 0,02Fe | Zr 1,0Nb 0,05Fe | Zr 1,0Nb 0,05Fe | Zr 1,0Nb 0,07Fe | Zr 1,0Nb 0,07Fe | Zr 1,0Nb 0,04Fe | Zr 1,0Nb 0,04Fe |
| O (wt%) | 0,13 | 0,13 | 0,14 | 0,14 | 0,15 | 0,15 | 0,11 | 0,11 |
| S (ppm) | 8 | 8 | 13 | 13 | 32 | 32 | 22 | 22 |
| Trempe | Non | Non | Oui | Oui | Non | Non | Non | Non |
| Polissage initial | Roue SiC | Roue SiC jusqu'à 240 | Bande SiC jusqu'à 240 | Bande SiC | Sablage SiC | Sablage SiC jusqu'à 240 | Roue SiC | Roue SiC jusqu'à 120 |
| Polissage final | Roue SiC 240 | Roue de finition | Roue de finition | Bande SiC 240 | Sablage SiC 240 | Silice colloïdale (drap) | Roue SiC 120 | Roue de finition |
| Gain de masse (mg/cm$^2$) | 15,62 | 11,12 | 9,64 | 11,42 | 15,76 | 9,25 | 22,14 | 12,52 |
| Teneur en H (ppm) | 635 | 16 | 13 | 282 | 918 | 15 | 954 | 65 |
| Temps de séjour (s) | 10 000 | 15 000 | 10 000 | 8 600 | 15 000 | 10 000 | 18 000 | 18 000 |
| Ra ($\mu$m) | 0,13 | 0,12 | 0,14 | 0,32 | 0,34 | 0,14 | 0,23 | 0,23 |
| Ecart-type sur Ra ($\mu$m) | 0,01 | 0,01 | 0,02 | 0,02 | 0,01 | 0,01 | 0,00 | 0,01 |
| Rsk | -1,65 | 0,72 | 0,29 | -1,21 | 0,75 | -0,35 | 1,28 | -0,53 |
| Ecart-type sur Rsk | 0,06 | 0,88 | 0,48 | 0,79 | 0,64 | 0,97 | 0,89 | 0,78 |
| Rku | 6,32 | 8,71 | 8,96 | 6,08 | 11,55 | 6,91 | 10,32 | 4,69 |
| Ecart-type sur Rku | 0,31 | 3,22 | 2,66 | 0,33 | 5,43 | 2,64 | 3,34 | 2,84 |
| Conforme à l'invention | Non | Oui | Oui | Non | Non | Oui | Non | Oui |

Le tube 1 est un tube de référence (la valeur absolue de son Rsk est trop élevée), dont la rugosité a été mesurée après un polissage avec des roues en carbure de silicium de grains croissants (polissage mécanique initial) jusqu'au grain 240 (polissage mécanique final). Il présente une rugosité Ra sensiblement égale à celle du tube 2 (qui est, lui, conforme en tous points à l'invention) issu du même lot, qui a subi les mêmes étapes de polissage avec des roues en carbure de silicium de grains croissants jusqu'au grain 240 (polissage mécanique initial), puis un polissage mécanique final à la roue de finition.

Le tube 3 (conforme à l'invention), issu d'un autre lot que les tubes 1 et 2, avec une teneur en Fe légèrement augmentée, a subi les mêmes étapes de polissage que le tube 2 si ce n'est que le polissage mécanique initial a été réalisé avec des bandes de SiC de grains croissants (jusqu'au grain 240), en lieu et place du polissage avec des roues en carbure de silicium de grains croissants. Le tube 4 issu du même lot a subi les mêmes étapes de polissage avec des bandes de SiC de grains croissants (polissage initial) que le tube 3 jusqu'au grain 240 (polissage mécanique final). Il n'a pas subi le polissage final à la roue de finition, contrairement au tube 3, et il n'est pas conforme à l'invention comme son Rsk est un peu trop élevé.

Le tube 5, issu d'un autre lot avec une teneur en fer encore augmentée, n'a pas subi les étapes de polissage mécanique initial par roue ou par bande mais par sablage avec des grains de SiC de dimension décroissante. Il a subi un polissage mécanique final par sablage avec des grains de SiC 240. Le tube 6 issu du même lot a, en sus, été, au final, poli par frottage avec un drap de polissage imprégné de pâte abrasive (de la silice colloïdale dans cet exemple). Le tube 5 a un Rku trop élevé, alors que le tube 6 est conforme à l'invention.

Pour confirmer l'impact du polissage initial, le polissage initial des tubes 7 et 8, issus d'un lot avec une teneur en fer médiane, avec des roues en carbure de silicium de grains croissants a été stoppé au grain 120. Comme attendu, la durée du polissage final à la roue de finition du tube 8 a dû être allongée pour obtenir une rugosité du tube conforme à l'invention, mais cela a été possible. L'obtention de la rugosité selon l'invention ne dépend donc de façon univoque ni du polissage initial, ni des caractéristiques de l'instrument utilisé pour le polissage mécanique final. L'homme du métier saura, expérimentalement, déterminer des conditions du polissage mécanique final (caractéristiques de l'outil de polissage et paramètres de son utilisation, couplés à la durée du polissage) qui permettront d'obtenir la rugosité selon l'invention.

Le tube 1 présente un Rsk trop élevé, bien que son Rku soit conforme à l'invention et que son Ra soit conforme à l'invention et sensiblement égal à celui du tube 2. Le tube 7 présente un Rsk et un Rku trop élevés, bien que son Ra soit conforme à l'invention et égal à celui du tube 8. Cela montre bien que les trois grandeurs représentatives de la rugosité du tube ne sont pas fortement corrélées, et que le polissage mécanique final présente une importance toute particulière pour l'obtention de la configuration de rugosité précise selon l'invention.

Le comportement en test APRP des tubes 2, 3, 6 et 8 du tableau 1 est représenté sur la figure 3. Pour faciliter la comparaison, les résultats des échantillons des figures 1 et 2 ont également été reportés, en grisé, sur la figure 3.

Pour deux échantillons issus du même tube que l'échantillon 2, l'essai a été prolongé respectivement jusqu'à 30 000 et 35 000 s sans apparition de breakaway. Les points correspondants sont reportés sur la figure 3.

La figure 3 comporte également les résultats obtenus pour les tubes 11 à 19 du tableau 2 ci-après, dont les compositions et les rugosités sont décrites. Ces tubes se distinguent de ceux du tableau 1 par une plus forte présence d'éléments d'alliage, mais leurs compositions demeurent conformes à celle exigée par l'invention. Tous les tubes testés comprenaient moins de 100 ppm de C et de Hf et moins de 1 ppm de fluor. Les éléments qui ne sont pas mentionnés sont présents au plus à l'état de traces.

Tableau 2 : Composition, variante de fabrication, gain de masse, teneur en hydrogène et rugosité des tubes 11 à 19

| Tube | 11 | 12 | 13 | 14 | 15 | 16 | 17 | 18 | 19 |
|---|---|---|---|---|---|---|---|---|---|
| Composition | Zr<br><br>1,0Nb<br>0,3Sn<br>0,1Fe | Zr<br><br>2,0Nb<br>0,2Sn<br>0,2Fe | Zr<br><br>0,8Nb<br>0,2Sn<br>0,12Fe | Zr<br><br>1,0Nb<br>0,5Sn<br>0,1Fe<br>0,2Cu | Zr<br>1,8Nb<br>0,6Sn<br>0,2Fe<br>0,1V<br>0,1Cr | Zr<br><br>2,8Nb<br>0,4Sn<br>0,01Fe<br>0,3Mo | Zr<br><br>1,5Nb<br>0,05Fe | Zr<br><br>1,0Nb<br>0,3Sn<br>0,1Fe | Zr<br><br>1,0Nb<br>0,3Sn<br>0,1Fe |
| O (ppm) | 2248 | 1348 | 1048 | 694 | 1242 | 843 | 1129 | 1829 | 1099 |
| S (ppm) | 6 | 26 | 15 | 29 | 19 | 95 | 55 | 24 | 95 |
| Etat | Recristallisé | Semi-recristallisé | Recristallisé | Recristallisé | Recristallisé | Recristallisé | Détendu | Détendu | Semi-recristallisé |
| Décapage | Oui | Oui | Non | Oui | Oui | Oui | Non | Oui | Oui |
| Polissage initial | Roue SiC 240 | Chimique | Roue SiC 240 | Bande SiC 240 | Bande SiC 240 | Chimique | Roue SiC 240 | Non | Chimique |
| Polissage final | Roue de finition | Roue de finition | Rodage pâte abrasive | Galetage | Roue de finition | Pâte abrasive (feutre) | Chimique | Roue de finition | Roue SiC 240 |
| Gain de masse $(mg/cm^2)$ | 10,67 | 11,35 | 11,28 | 9,67 | 10,06 | 12,27 | 13,72 | 12,03 | 16,35 |
| Teneur en H (ppm) | 16 | 16 | 61 | 18 | 45 | 15 | 383 | 82 | 474 |
| Temps de séjour (s) | 10 000 | 15 000 | 18 000 | 10 000 | 10 000 | 15 000 | 10 000 | 18 000 | 15 000 |
| Ra ($\mu$m) | 0,16 | 0,12 | 0,12 | 0,14 | 0,15 | 0,12 | 0,08 | 0,11 | 0,38 |
| Rsk | 0,24 | 0,61 | 0,03 | -0,25 | 0,24 | -0,49 | -0,02 | -0,67 | 0,89 |
| Rku | 9,02 | 4,08 | 3,79 | 6,78 | 8,21 | 4,82 | 10,88 | 6,62 | 12,17 |
| Conforme à l'invention | Oui | Oui | Oui | Oui | Oui | Oui | Non | Oui | Non |

Les tubes 11, 13 et 17 ont tous subi la gamme classique de polissage mécanique initial à la roue SiC jusqu'au grain 240, les tubes 14 et 15 la gamme de polissage mécanique initial par bande SiC jusqu'au grain 240 les tubes 12, 16 et 19 un polissage chimique initial et le tube 18 n'a subi aucune étape de polissage initial. L'étape de polissage final diffère, comme indiqué sur le tableau 2 : polissage chimique ou polissage mécanique par divers moyens : roue de finition, abrasion par une pâte abrasive (silice colloïdale, diamants artificiels, oxydes métalliques de Ti ou de Zr), galetage. Pour le tube 19 le polissage mécanique final correspond à un polissage à la roue SiC de grain 240 et son Rku est trop élevé pour être conforme à l'invention. Le polissage chimique final du tube 17, non suivi par un polissage mécanique final, n'a pas permis d'obtenir un Rku conforme à l'invention. Les procédés d'abrasion par pâte abrasive testés sont le rodage avec une pâte abrasive contenant des diamants synthétiques pour le tube 13 et un feutre imprégné d'un mélange d'oxydes métalliques (Ti et Zr) pour le tube 16. D'autres procédés d'abrasion avec pâte abrasive pourraient être utilisés, par exemple un usinage par extrusion de pâte abrasive, voire sans mise en oeuvre de pâte abrasive comme pour le tube 14 (galetage). Le tube 8 a subi directement un polissage à la roue de finition après le dernier traitement thermique. Comme attendu, la durée du polissage mécanique final à la roue de finition a dû être drastiquement allongée pour obtenir les caractéristiques requises par l'invention pour Ra, Rsk et Rku, rendant le procédé peu industriel. Les exemples du tableau 3 montrent que l'obtention de la rugosité selon l'invention ne dépend pas de la présence d'un polissage initial ni de sa nature, mécanique ou non mécanique, et que le polissage mécanique final peut être réalisé avec des moyens variés.

La figure 3 montre que les tubes réalisés selon l'invention, en termes de composition et de rugosité de surface, ne subissent pas de breakaway avant une durée d'exposition à la vapeur d'eau à 1000°C qui est dans tous les cas bien supérieure aux 5000 s constatées dans l'art antérieur sur des alliages similaires, voir les points en grisé et les points en noir situés au-dessus de la droite de régression sur la figure 3 qui correspondent respectivement aux échantillons de référence des figures 1 et 2 et aux échantillons 17 et 19 du tableau 2. En particulier, le changement de pente du gain de masse (correspondant à une accélération de la corrosion) et l'hydruration (reprise d'hydrogène au-delà de 200 ppm) sont sensiblement différés au-delà de 10 000 secondes. On n'observe pas de différences de résultats très manifestes entre les diverses manières de réaliser le polissage final.

S'il était connu que la résistance à l'oxydation à haute température dépendait de l'état de surface, notamment de l'absence de pollution au fluor (pollution qui serait issue, par exemple, d'un décapage en bain fluo-nitrique) et d'une rugosité Ra maîtrisée, il n'était pas connu que d'autres paramètres de rugosité reliés à la forme des pics et compris au-dessous de valeurs seuils, à savoir le Rsk et le Rku, pouvaient permettre, s'ils étaient judicieusement choisis, de retarder encore l'accélération cinétique de l'oxydation et de l'hydruration du tube en situation d'APRP.

Les paramètres Rsk et Rku correspondent à l'analyse de mesures de rugosité réalisées en profilométrie 2D c'est-à-dire à une analyse des écarts géométriques de l'état de surface par rapport à la ligne moyenne. En cas de mesure en profilométrie 3D, les paramètres équivalents Ssk et Sku peuvent être utilisés, ou l'analyse peut être réalisée sur une ou plusieurs génératrices au lieu de l'ensemble de la surface.

**Revendications**

1. Composant tubulaire de réacteur nucléaire à eau pressurisée, dont la composition pondérale consiste en :

    - 0,8% $\leq$ Nb $\leq$ 2,8% ;
    - traces $\leq$ Sn $\leq$ 0,65% ;
    - 0,015% $\leq$ Fe $\leq$ 0,40% ; de préférence 0,020 % $\leq$ Fe $\leq$ 0,35 % ;
    - traces $\leq$ C $\leq$ 100 ppm ;
    - 600 ppm $\leq$ O $\leq$ 2300 ppm ; de préférence 900 ppm $\leq$ O $\leq$ 1800 ppm ;
    - 5 ppm $\leq$ S $\leq$ 100 ppm ; de préférence 8 ppm $\leq$ S $\leq$ 35 ppm
    - traces $\leq$ Cr + V + Mo + Cu $\leq$ 0,35% ;
    - traces $\leq$ Hf $\leq$ 100 ppm ;
    - F $\leq$ 1 ppm ;

le reste étant du zirconium et des impuretés résultant de l'élaboration, et dont la surface externe a une rugosité Ra inférieure ou égale à 0,5 $\mu$m, obtenue à la suite d'un polissage mécanique final, **caractérisé en ce que** sa surface externe a une rugosité Rsk $\leq$ 1 en valeur absolue, et une rugosité Rku $\leq$ 10.

2. Composant tubulaire de réacteur nucléaire à eau pressurisée selon la revendication 1, **caractérisé en ce que** sa surface externe a une rugosité Ra inférieure ou égale à 0,3 $\mu$m, obtenue à la suite dudit polissage mécanique final.

3. Composant tubulaire de réacteur nucléaire à eau pressurisée selon la revendication 1 ou 2, **caractérisé en ce que**

sa surface externe a une rugosité Rsk ≤ 0,75 en valeur absolue, et une rugosité Rku ≤ 9.

4. Procédé de fabrication d'un tube de gainage de combustible pour réacteur nucléaire, **caractérisé en ce que** :

   - on prépare un lingot d'un alliage de zirconium de composition pondérale :

      * 0,8% ≤ Nb ≤ 2,8% ;
      * traces ≤ Sn ≤ 0,65% ;
      * 0,015% ≤ Fe ≤ 0,40% ; de préférence 0,020 % ≤ Fe ≤ 0,35 % ;
      * traces ≤ C ≤ 100 ppm ;
      * 600 ppm ≤ O ≤ 2300 ppm ; de préférence 900 ppm ≤ O ≤ 1800 ppm ;
      * 5 ppm ≤ S ≤ 100 ppm ; de préférence 8 ppm ≤ S ≤ 35 ppm ;
      * traces ≤ Cr + V + Mo + Cu ≤ 0,35% ;
      * traces ≤ Hf ≤ 100 ppm ;
      * F ≤ 1 ppm ;

   le reste étant du zirconium et des impuretés résultant de l'élaboration ;
   - on exécute sur le lingot un forgeage, suivi optionnellement d'une trempe, puis un filage et des traitements thermomécaniques comportant des laminages à froid séparés par des recuits intermédiaires, tous les recuits intermédiaires étant effectués à une température inférieure à la température de transus α → α + β de l'alliage, se terminant par un recuit de détente, de semi-recristallisation ou de recristallisation, et aboutissant à l'obtention d'un tube ;
   - optionnellement, on procède à un décapage chimique et/ou à un polissage électrolytique et/ou à un polissage mécanique initial de la surface externe dudit tube ;
   - et on exécute un polissage mécanique final de ladite surface externe pour lui conférer une rugosité Ra inférieure ou égale à 0,5 μm, une rugosité Rsk ≤ 1 en valeur absolue, et une rugosité Rku ≤ 10.

5. Procédé selon la revendication 4, **caractérisé en ce que** les recuits intermédiaires sont effectués à des températures inférieures ou égales à 600°C.

6. Procédé selon l'une des revendications 4 ou 5, **caractérisé en ce que** ledit polissage mécanique final est réalisé avec une roue de finition.

7. Procédé selon l'une des revendications 4 ou 5, **caractérisé en ce que** ledit polissage mécanique final est réalisé par abrasion avec une pâte abrasive.

8. Procédé selon la revendication 7, **caractérisé en ce que** ledit polissage mécanique final est réalisé par un procédé choisi parmi le rodage, l'extrusion de pâte abrasive, l'abrasion à l'aide d'un feutre ou d'un drap de polissage imprégné de pâte abrasive.

9. Procédé selon l'une des revendications 4 ou 5, **caractérisé en ce que** ledit polissage mécanique final est réalisé par galetage.

**Patentansprüche**

1. Rohrförmige Komponente eines Druckwasserkernreaktors, mit einer gewichtsmäßigen Zusammensetzung bestehend aus:

      - 0,8 % ≤ Nb ≤ 2,8 %;
      - Spuren ≤ Sn ≤ 0,65 %;
      - 0,015 % ≤ Fe ≤ 0,40 %; vorzugsweise 0,020 % ≤ Fe ≤ 0,35 %;
      - Spuren ≤ Ca ≤ 100 ppm;
      - 600 ppm ≤ O ≤ 2300 ppm; vorzugsweise 900 ppm ≤ O ≤1800 ppm;
      - 5 ppm ≤ S ≤ 100 ppm; vorzugsweise 8 ppm ≤ S ≤ 35 ppm
      - Spuren ≤ Cr + V + Mo + Cu ≤ 0,35 %;
      - Spuren ≤ Hf ≤ 100 ppm;
      - F ≤ 1 ppm;

Der Rest besteht aus Zirkonium und verarbeitungsbedingten Verunreinigungen, dessen äußere Oberfläche eine Rauigkeit Ra von 0,5 $\mu$m hat, die nach einem abschließenden mechanischen Polieren erhalten wird, **dadurch gekennzeichnet, dass** seine Außenfläche eine Rauigkeit Rsk $\leq$ 1 als Absolutwert und eine Rauigkeit Rku $\leq$ 10 hat.

2. Rohrförmige Komponente eines Druckwasserkernreaktors nach Anspruch 1, **dadurch gekennzeichnet, dass** ihre äußere Oberfläche eine Rauigkeit Ra von weniger als oder gleich 0,3 $\mu$m aufweist, die als Ergebnis des abschließenden mechanischen Polierens erhalten wird.

3. Rohrförmige Komponente eines Druckwasserkernreaktors nach Anspruch 1 oder 2, **dadurch gekennzeichnet, dass** ihre Außenfläche eine Rauigkeit Rsk $\leq$ 0,75 als Absolutwert und eine Rauigkeit Rku $\leq$ 9 aufweist.

4. Verfahren zur Herstellung eines Brennstoffhüllrohrs für einen Kernreaktor, **dadurch gekennzeichnet, dass**:

   - ein Barren aus einer Zirkoniumlegierung mit der folgenden Gewichtszusammensetzung erstellt wird:

     * 0,8 % $\leq$ Nb $\leq$ 2,8 %;
     * Spuren $\leq$ Sn $\leq$ 0,65 %;
     * 0,015 % $\leq$ Fe $\leq$ 0,40 %; vorzugsweise 0,020 % $\leq$ Fe $\leq$ 0,35 %;
     * Spuren $\leq$ C $\leq$ 100 ppm;
     * 600 ppm $\leq$ O $\leq$ 2300 ppm; vorzugsweise 900 ppm $\leq$ O $\leq$ 1800 ppm;
     * 5 ppm $\leq$ S $\leq$ 100 ppm; vorzugsweise 8 ppm $\leq$ S $\leq$ 35 ppm;
     * Spuren $\leq$ Cr + V + Mo + Cu $\leq$ 0,35%;
     * Spuren $\leq$ Hf $\leq$ 100 ppm;
     * F $\leq$ 1 ppm;
     wobei der Rest Zirkonium und Verunreinigungen aus der Verarbeitung sind;

   - der Block geschmiedet wird, optional gefolgt von einer Abschreckung, dann stranggepresst wird und thermomechanische Behandlungen durchgeführt werden, die Kaltwalzen umfassen, das durch Zwischenglühungen getrennt ist, wobei alle Zwischenglühungen bei einer Temperatur unterhalb der Transustemperatur $\alpha \rightarrow \alpha + \beta$ der Legierung durchgeführt werden, mit einem Entspannungs-, Halb- oder Rekristallisationsglühen enden und zur Herstellung eines Rohrs führen;
   - optional ein chemisches Beizen und/oder ein elektrolytisches Polieren und/oder ein anfängliches mechanisches Polieren der äußeren Oberfläche des Rohrs durchgeführt wird;
   - und ein abschließendes mechanisches Polieren der Außenfläche durchgeführt wird, um ihr eine Rauigkeit Ra von weniger als oder gleich 0,5$\mu$m, eine Rauigkeit Rsk $\leq$ 1 als Absolutwert und eine Rauigkeit Rku $\leq$ 10 zu verleihen.

5. Verfahren nach Anspruch 4, **dadurch gekennzeichnet, dass** das Zwischenglühen bei Temperaturen von 600 °C oder darunter durchgeführt wird.

6. Verfahren nach einem der Ansprüche 4 oder 5, **dadurch gekennzeichnet, dass** das abschließende mechanische Polieren mit einem Finishing Wheel durchgeführt wird.

7. Verfahren nach einem der Ansprüche 4 oder 5, **dadurch gekennzeichnet, dass** das abschließende mechanische Polieren durch Abschleifen mit einer Schleifpaste durchgeführt wird.

8. Verfahren nach Anspruch 7, **dadurch gekennzeichnet, dass** das abschließende mechanische Polieren durch ein Verfahren erfolgt, das aus Läppen, Extrudieren von Schleifpaste und Abschleifen mithilfe eines mit Schleifpaste imprägnierten Polierfilzes oder -tuchs ausgewählt wird.

9. Verfahren nach einem der Ansprüche 4 oder 5, **dadurch gekennzeichnet, dass** das abschließende mechanische Polieren durch Walzen durchgeführt wird.

**Claims**

1. Tubular component for a pressurised-water nuclear reactor, having the following composition by weight:

- 0.8% ≤ Nb ≤ 2.8% ;
- traces ≤ Sn ≤ 0.65% ;
- 0.015% ≤ Fe ≤ 0.40% ; preferably 0.020 % ≤ Fe ≤ 0.35 % ;
- traces ≤ C ≤ 100 ppm ;
- 600 ppm ≤ O ≤ 2300 ppm ; preferably 900 ppm ≤ O ≤ 1800 ppm ;
- 5 ppm ≤ S ≤ 100 ppm ; preferably 8 ppm ≤ S ≤ 35 ppm ;
- traces ≤ Cr + V + Mo + Cu ≤ 0.35% ;
- traces ≤ Hf ≤ 100 ppm ;
- F ≤ 1 ppm ;

the remainder being zirconium and impurities resulting from production, the outer surface of which has a roughness Ra less than or equal to 0.5 μm, obtained following a final mechanical polishing step, **characterised in that** its outer surface has a roughness Rsk ≤ 1 in absolute value and a roughness Rku ≤ 10.

2. Tubular component for a pressurised-water nuclear reactor according to claim 1, **characterised in that** its outer surface has a roughness Ra less than or equal to 0.3 μm, obtained following the final mechanical polishing step.

3. Tubular component for a pressurised-water nuclear reactor according to claim 1 or 2, **characterised in that** its outer surface has a roughness Rsk ≤ 0.75 in in absolute value and a roughness Rku ≤ 9.

4. Method for producing a fuel cladding tube for a nuclear reactor, **characterised in that**:

- a zirconium-alloy ingot having the following composition by weight is prepared:

   * 0.8% ≤ Nb ≤ 2.8% ;
   * traces ≤ Sn ≤ 0.65% ;
   * 0.015% ≤ Fe ≤ 0.40% ; preferably 0.020 % ≤ Fe ≤ 0.35 % ;
   * traces ≤ C ≤ 100 ppm ;
   * 600 ppm ≤ O ≤ 2300 ppm ; preferably 900 ppm ≤ O ≤ 1800 ppm ;
   * 5 ppm ≤ S ≤ 100 ppm ; preferably 8 ppm ≤ S ≤ 35 ppm ;
   * traces ≤ Cr + V + Mo + Cu ≤ 0.35% ;
   * traces ≤ Hf ≤ 100 ppm ;
   * F ≤ 1 ppm ;
   the remainder being zirconium and impurities resulting from production;

- the ingot is subjected to forging, optionally followed by quenching, then to extrusion and thermomechanical treatments including cold rolling separated by intermediate annealings, wherein all intermediate annealings are carried out at a temperature below the transus temperature $\alpha \rightarrow \alpha + \beta$ of the alloy, ending with a relief, semi-recristallisation or recristallisation annealing, and resulting in the production of a tube;
- optionally, chemical pickling and/or electrolytic polishing and/or initial mechanical polishing of the outer surface of the tube is carried out;
- and final mechanical polishing of the outer surface to give it a roughness Ra less than or equal to 0.5 μm, a roughness Rsk ≤ 1 in absolute value and a roughness Rku ≤ 10 is carried out.

5. Method according to claim 4, **characterised in that** the intermediate annealings are carried out at temperatures less than or equal to 600°C.

6. Method according to either of claims 4 or 5, **characterised in that** the final mechanical polishing is carried out with a finishing roller.

7. Method according to either of claims 4 or 5, **characterised in that** the final mechanical polishing is carried out by abrasion with an abrasive paste.

8. Method according to claim 7, **characterised in that** the final mechanical polishing is carried out by a method selected from: honing, abrasive paste extrusion, abrasion using a polishing felt or sheet impregnated with abrasive paste.

9. Method according to either of claims 4 or 5, **characterised in that** the final mechanical polishing is carried out by roller burnishing.

FIG.1

FIG.2

FIG.3

EP 3 994 286 B1

## RÉFÉRENCES CITÉES DANS LA DESCRIPTION

**Documents brevets cités dans la description**

- WO 2006027436 A